# EUROPEAN PATENT APPLICATION

(11) **EP 1 685 945 A1**
(43) Date of publication of application: **02.08.2006**
(21) Application number: 04818511.0
(22) Date of filing: 12.11.2004
(51) Int. Cl.: B29C 55/28

(54) **MULTI-LAYER BLOWN FILM MOLDING MACHINE AND METHOD OF MOLDING MULTI-LAYER BLOWN FILM**

(30) Priority: 12.11.2003 JP 2003382947; 20.02.2004 JP 2004045474
(71) Applicant: MITSUBISHI HEAVY INDUSTRIES, LTD., Tokyo 108-8215 (JP); Shikoku Kakoh Co., Ltd., Okawa-gun, Kagawa-ken 769-2794 (JP)
(72) Inventor: KITAUJI, Y., MITSUBISHI HEAVY INDUSTRIES, LTD., Nagoya-shi, Aichi 453-0862 (JP); NISHIDA, T., MITSUBISHI HEAVY INDUSTRIES, LTD., Nagoya-shi, Aichi 453-0862 (JP); ANDOU, A., MITSUBISHI HEAVY INDUSTRIES, LTD., Nagoya-shi, Aichi 453-0862 (JP); KOMETANI, H., MITSUBISHI HEAVY INDUSTRIES, LTD., Nagoya-shi, Achi 453-0862 (JP); KITAJIMA, H., MITSUBISHI HEAVY INDUSTRIES, LTD., Nagoya-shi, Aichi 453-0862 (JP); GOMA, S., MITSUBISHI HEAVY INDUSTRIES, LTD., Nagoya-shi, Aichi 453-0862 (JP); NYUKO, M., MITSUBISHI IKOKU KAKOH CO., LTD., Higashikagawa-city, Kagawa 769-2794 (JP); YOSHIHARA, S., MITSUBISHI IKOKU KAKOH CO., LTD., Higashikagawa-city, Kagawa 769-2794 (JP); FUTAGAWA, Takashi, c/o SHIKOKU KAKOH CO., LTD., Higashikagawa-city, Kagawa 769-2794 (JP); HASEGAWA, Noritaka, CHURYO ENGINEERING CO., LTD., Nagoya-shi, Aichi 453-0862 (JP)
(74) Representative: Intes, Didier Gérard André
(86) International application number: PCT/JP2004/016846
(87) International publication number: WO 2005/046970

(57) **Abstract**

A multi-layered blown film forming apparatus contains an adapter provided to supply a multiple types of resins, a forming die provided on a downstream side in an axial direction of the adapter, and a temperature controller mechanism. Molten resins of multiple types are individually fed to the forming die through the adapter. The forming die contains a main body, a multi-layer structure of a plurality of single-layer thin film dies disposed in an inner portion of the main body in an axial direction to produce a plurality of resin thin films corresponding to the molten resins of the multiple types, and a first annular path formed between main body and the multi-layer structure. A multi-layered thin film in which the plurality of resin thin films are overlaid is passed through the first annular path and is outputted as a multi-layered thin annular film. The temperature controller mechanism controls individual temperatures of the plurality of single-layer thin film forming dies independently.

## Description

### Technical Field

The present invention relates to a multi-layered blown film forming apparatus and a multi-layered blown film forming method.

### Background Art

Resin films are widely and popularly used. In the technique for mass-producing the resin films, improvement of a forming speed and high-accuracy thickness control are required. As one of such mass-production techniques, a blown film forming apparatus is known which has a forming die for carrying out annular extrusion of resin. In the apparatus, air is blown into a tubular resin film extruded from the forming die for expansion, and the expanded tubular resin film is pushed down by using a nip roller to produce a film bubble, and then the film bubble is cooled. In this manner, a film product as a blown film is manufactured. As cooling techniques are known natural cooling, forced air cooling using air injected from air nozzles, forced water cooling using cooling water, and two-stage forced cooling using air and water.

Multi-layered blown film forming apparatuses for forming multi-layered films by extruding films to have a multi-layer structure are known, as disclosed in U.S. Patent Nos. 3,337,914 (a first conventional example) and 4,798,526 (a second conventional example). The multi-layered blown film forming apparatuses have multiple stages of die blocks and are advantageous in that increase in the stages of the die blocks permits increase in the number of layers of the blown film. In such a multi-layer type multi-layered blown film forming apparatus, however, a positional difference are present between the die blocks. For this reason, in order to align the stages in height, adapter tubes are provided to the extruders. Since the adapter tubes are necessary, the structure of the multi-layer multi-layered blown film forming apparatus is complicated.

As another conventional example, U.S. Patent 3,966,861 (a third conventional example) discloses a multi-layered blown film forming apparatus that multi-layer resin supply paths are spirally formed. In the forming apparatus of this conventional example, when the multi-layer structure for five or more stages is used, the outer diameter of a metal die tends to be excessively increased. Thus, the apparatus is disadvantageous in practicability for miniaturization, and makes it difficult to equally feed many types of molten resins to the many blocks.

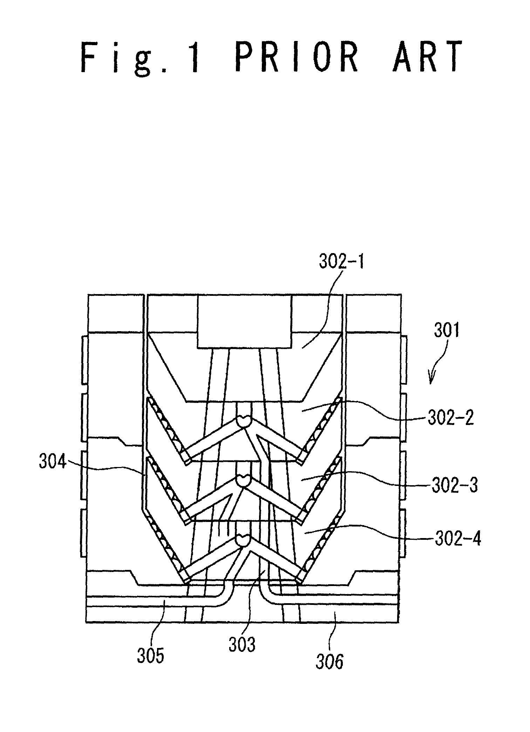

Japanese Laid Open Patent Application (JP-A-Heisei 07-001579: a fourth conventional example) discloses a forming apparatus in which the order of stages in a multi-stage structure and the number of stages can be changed. As shown in Fig. 1, a die 301 has a multi-stage structure of a plurality of feeding modules 302-1 to 302-4 having substantially the same conical shapes. A plurality of axial direction paths 303 corresponding to respective stages are disposed in a same distance from an axial center at a same angular intervals on a circumference. According to the fourth conventional example, the number of layers of a film can easily be changed through the change of the number of modules, and the positional order of the modules in the multi-stage structure can easily be changed through the change of relative angles of the modules. However, the resin flow is directed in substantially the outward radial direction toward a discharge clearance 304 from the axial center, and all resin feeding operations can be carried out in a common height in a die base 306 through feeding paths 305.

According to the technique shown in the fourth conventional example, a plurality of large-diameter openings must be provided to pass through the modules of the individual stages of the die in order to cool extruded films. Also, the arrangement of the feeding paths for molten resin is complicated. In addition, since air flowed through air paths cools the die, the heated and melted resin is cooled. Further, since much air flows for cooling, it is difficult to carry out fine adjustment for maintaining the diameter of the film bubble. The feeding paths are formed diagonally from the center of the die towards the center of feed ports in each stage, so that it is difficult to uniformly supply the resin to the respective feed ports.

In a technique disclosed in Japanese Laid Open Patent Application (JP-P2002-79576A: a fifth conventional example), a plurality of large-diameter openings passing through the modules, which are shown in the fourth conventional example, are replaced with small-diameter openings axially extending. Thereby, while cooling of the modules is restrained, the adjustment of air pressure with respect to the bubble diameter is facilitated. Also, the diagonal feeding path directed to the center of the feed port is changed into a path in the horizontal direction.

When a pancake dies is used, the heights of extruders are different, since positions of extrusion ports of extruders for feeding molten resin are different for every stage of the die. For aligning the heights of the extruders, adapter tubes are provided for outlets of the extruders. When resin is fed from a lateral direction, it is difficult to accomplish uniform distribution of the resin since the resin is fed from a side face of the circumference of the die.

In this way, in the many multi-layered blown film forming apparatuses according to conventional examples described above, a structure is employed in which heating is carried out from the outside of resin feeding modules, and the modules are disposed in contact with one another. In the multi-layered film, respective films have different melt points, softening points, and optimal process temperatures, so that it is difficult to adjust the temperature to be suitable to the respective film materials in such a heating structure.

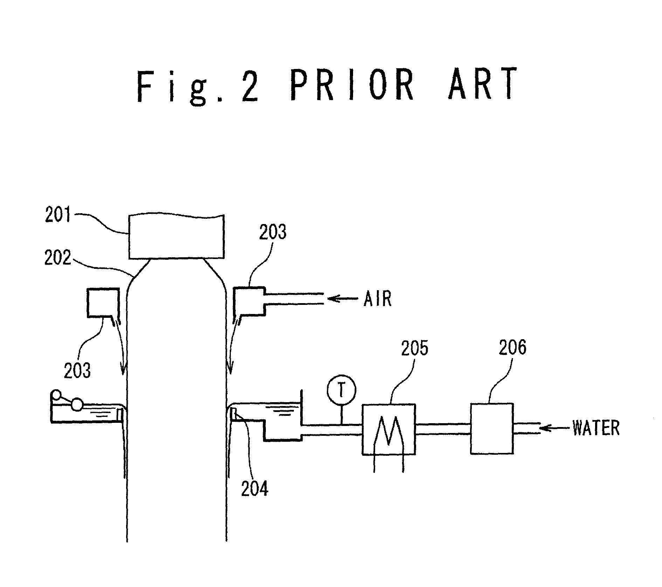

As shown in Fig. 2, in the two-stage forced cooling technique, a first cooling stage is carried out by using cooling air blown down from an annular air nozzle 203 to a multi-layered resin tubular film 202 extruded from a multi-layered-film forming die 201. The multi-layered resin tubular film 202 cooled by the cooling air subsequently undergoes a second cooling stage using cooling water flowing down from an annular cooling water nozzle 204. The cooling water flowing down from the cooling water nozzle 204 is cooled by a heat exchanger 205 to an appropriate temperature, and the flow rate thereof is adjusted by a flow-rate adjustment valve 206. Thereby, through the control of a quantity of the cooling water, and the temperature thereof, the detection of the overflow height of an overflow weir, and feedback control, the cooling efficiency and the cooling performance can be optimized.

Japanese Examined Patent Application (JP-B-Showa 60-026010: a sixth conventional example) discloses a blown film manufacturing technique. In this sixth conventional example, a gas blow unit and a gas suction unit are provided above a water cooling unit for cooling the bubble of a tubular film extruded from a circular die. The gas suction unit draws in warm gases blown from the gas blow unit so that the bubble is cooled. Thereby, smooth gas flow is formed from the bubble circumference, so that bubble forming stability is improved.

Japanese Laid Open Patent Application (JP-A-Heisei 09-109274: a seventh conventional example) discloses a blown film manufacturing technique. In this seventh conventional example, a tubular film extruded from a die is expanded with air, and the air is closed to form a bubble-state extrudate. A water shower is employed to carry out a water cooling method, and the bubble-state extrudate is cooled. Then, the bubble-state extrudate is compressed by a heated pinch roller. Thus, films are thermally fusion-spliced together, and a single film is thereby manufactured. A fold width of the tubular film is taken as a width of a film product, and residual heat in the film extrusion is used for the thermal fusion splicing, thereby to realize high-speed production.

In the above-described blown film manufacturing technique, no problem is observed when the films are formed of a material of a single type. However, a problem is observed when a multi-layered film is manufactured by extruding materials of multiple types into a layer form. More specifically, the melt point and the crystallization temperature are different depending on the type of the resin. For this reason, in the cooling technique shown in the conventional technique, stresses are caused due to strains between film resin materials, thereby to cause curling on the resin film. In addition, when the cooling speed is inappropriate, crystallization of the material resin advances, heiz occurs to an extent of degrading the quality level. Therefore, there remain problems pending resolution in regard to the quality of commercial merchandizes.

According to the bubble cooling technique shown in the sixth conventional example, smooth gas flow is formed around the bubble circumference thereby to improve the bubble forming stability. A film bubble immediately after high temperature extrusion is soft and low in tensile strength. For this reason, when high-velocity gases are blown off near the outlet of the die, the form of the bubble is likely to collapse. For this reason, the blow-off velocity needs to be reduced to maintain the bubble form, consequently reducing the cooling effect.

According to the blown film manufacturing technique shown in the seventh conventional example, the inner surface of an annular bubble-state film is planarly compressed and thermally adhered together. The manufacture is facilitated when resin temperature of the inner layers of the films formed of resins of multiple types in the form of a layer is low. In addition, there is an advantage in that since the film product has symmetric obverse and reverse sides, internal strains on the two sides cancel each other, thereby to prevent strain stresses. Nevertheless, however, because of the multi-layer structure, there are drawbacks to exploit properties of the resin materials of the respective layers, i.e., surface smoothness and glazing properties, internal strength and gas-barrier properties, and reverse-surface thermal adhesivity. Using the water shower in this manufacturing technique is aimed for sufficient cooling in order to securing a certain tensile strength of the bubble, but it is not aimed neither to carry out rapid cooling not to improve the film quality.

It is important to align the heights of extruders. In addition, it is important that modules can easily be increased. Particularly, the temperature in units of layers is required to be appropriate. It is important to integrate the layers of a die into a multi-layer structure as a unitary rigid body and to carry out unitary temperature control for the rigid body. Further, required is that the properties of multi-layered resin are exploited, and transparency is high with less curling and with no heiz.

### Disclosure of Invention

An object of the present invention is to provide a multi-layered blown film forming apparatus and a multi-layered blown film forming method, in which the heights of extruders can be aligned, and concurrently, modules can easily be increased.

Another object of the present invention is to provide a multi-layered blown film forming apparatus and a multi-layered blown film forming method, in which temperature control can be controlled appropriately in units of layers.

Still another object of the present invention is to provide a multi-layered blown film forming apparatus and a multi-layered blown film forming method, in which a multi-layer structure is integrally formed into a unitary rigid body and unitary temperature control is carried out for the rigid body.

Yet another object of the present invention is provide a multi-layered blown film forming apparatus and a multi-layered blown film forming method, in which properties of a multi-layered resin is exploited, and transparency is high with less curling and with no heiz.

In an aspect of the present invention, a multi-layered blown film forming apparatus includes an adapter provided to supply multiple types of resins; a forming die provided on a downstream side in an axial direction of the adapter; and a temperature controller mechanism. Molten resins of the multiple types are individually fed to the forming die through the adapter. The forming die includes a main body; a multi-layer structure of a plurality of single-layer thin film dies disposed in an inner portion of the main body in an axial direction to produce a plurality of resin thin films corresponding to the molten resins of the multiple types; and a first annular path formed between the main body and the multi-layer structure. A multi-layered thin film in which a plurality of resin thin films are overlaid is passed through the first annular path and is outputted as a multi-layered thin film annular film. The temperature controller mechanism controls individual temperatures of the plurality of single-layer thin film forming dies independently.

The temperature controller mechanism may include a plurality of cartridge heaters provided so as to pierce the multi-layer structure; at least one temperature sensor provided in each of the plurality of single-layer thin film forming dies of the multi-layer structure; and a controller circuit configured to drive the plurality of cartridge heaters independently in accordance with temperatures set for the plurality of single-layer thin film forming dies and temperatures detected by the temperature sensors so that corresponding one or ones of the plurality of single-layer thin film forming dies are individually heated by the plurality of individual cartridge heaters.

The temperature controller mechanism may be provided so as to pierce the multi-layer structure, and may further include a cooling air feeding tube that discharges cooling air for cooling the plurality of individual single-layer thin film forming dies; and a controller circuit controls an amount of the cooling air fed to the cooling air feeding tube.

Each of the plurality of single-layer thin film forming dies may include an upstream-side single-layer forming die and a downstream-side single-layer forming die. An annular cooling air path is formed between the upstream-side single-layer forming die and the downstream-side single-layer forming die, and the cooling air from the cooling air feeding tube flows through the annular cooling air path, thereby the upstream-side single-layer forming die and the downstream-side single-layer forming die are cooled.

The multi-layered blown film forming apparatus further include a lip main body provided in a bottom portion of the forming die and having a lip portion having a second annular path connected to the first annular path so that the multi-layered thin film is outputted. The temperature controller mechanism further includes an air storage portion provided between the lip main body and the multi-layer structure; a bubble air feeding tube provided to pierce the multi-layer structure to the air storage portion to feed bubble air to the air storage portion; and an air nozzle that pierces the lip portion to the air storage portion and that discharges the bubble air present in the air storage portion to an inner portion of the multi-layered thin film outputted from the second annular path. The controller circuit controls an amount of the bubble air fed to the air storage portion through the bubble air feeding tube.

The multi-layered blown film forming apparatus may further include a cooling mechanism provided downstream of the forming die to cool the multi-layered thin film annular film.

The cooling mechanism includes a first cooling mechanism for air-cooling the multi-layered thin film annular film by using cooling air; a second cooling mechanism provided on a downstream side of the first cooling mechanism to cool the multi-layered thin film annular film by using an annular cooling water flow; and a third cooling mechanism provided on a downstream side of the second cooling mechanism to cool the multi-layered thin film annular film by using cooling water spray.

The first cooling mechanism includes an air feeding tube for feeding a cooling airflow to an annular air blow outlet to air-cool the multi-layered thin film annular film by using the cooling airflow fed from the annular air blow outlet; an airflow rate adjusting unit interposed in the air feeding tube to adjust an air flow rate of the cooling air; and an air-cooling heat exchanger unit interposed in the air feeding tube and that cools the airflow.

The second cooling mechanism may include a first cooling water feeding tube for feeding first cooling water; a first water flow rate adjusting unit interposed in the first cooling water feeding tube to adjust a water flow rate of the first cooling water; and a first cooling water heat exchanger unit interposed in the first cooling water feeding tube to cool the first cooling water; and a reservoir unit for storing the first cooling water. The reservoir unit includes a weir provided to an inner-side upper periphery of the reservoir unit so that the first cooling water overflows as the annular cooling water flow, and the height of the weir is adjustable from a water level of the first cooling water.

The third cooling mechanism may include a plurality of sprays provided to a circumference of the multi-layered thin film annular film to spray second cooling water; a second cooling water feeding tube for feeding the second cooling water to the plurality of sprays; a second cooling water flow amount adjustment unit interposed in the second cooling water feeding tube to adjust a second cooling water flow rate of the second cooling water; and a second cooling water heat exchanger unit interposed in the second cooling water feeding tube to cool the second cooling water.

The plurality of single-layer thin film forming dies have a same size. Each of the plurality of single-layer thin film forming dies includes a truncated conical upstream-side single-layer forming die having a truncated conical portion; and a truncated conical downstream-side single-layer forming die connected to the upstream-side single-layer forming die on the downstream side. The upstream-side single-layer forming die and the downstream-side single-layer forming die each have a recess portion in a bottom portion, and the downstream-side single-layer forming die engages the recess portion of the upstream-side single-layer forming die. The upstream-side single-layer forming die receives a corresponding one of the molten resins of the multiple types, and feeds the molten resin to the downstream-side single-layer forming die. The downstream-side single-layer forming die includes a radial resin path and a spiral resin path formed to a side face of the truncated conical portion and connected the radial resin path, and outputs the resin from the upstream-side single-layer forming die to the first annular path through the radial resin path and the spiral resin path.

According to another aspect of the present invention, a multi-layered blown film forming method is achieved by independently controlling temperatures of a plurality of single-layer thin film dies, by feeding molten resins of multiple types individually to the plurality of single-layer thin film forming dies through an adapter; by producing a plurality of resin thin films corresponding to the molten resins of the multiple types by using the plurality of single-layer thin film forming dies; and by outputting, as a multi-layered thin film annular film, a multi-layered thin film in which a plurality of resin thin films from the plurality of single-layer thin film forming dies are overlaid, through the first annular path formed between the main body and the multi-layer structure. A forming die includes a main body, the multi-layer structure of the plurality of single-layer thin film dies disposed in an inner portion of the main body in the axial direction.

The step of controlling is achieved by comparing a temperature set for each of the plurality of single-layer thin film forming dies and a temperature detected by at least one temperature sensor provided in each of the plurality of single-layer thin film forming dies; and by driving the plurality of individual cartridge heaters independently in accordance with a result of the comparison so that corresponding one of the plurality of single-layer thin film forming dies is individually heated by a corresponding one of the plurality of cartridge heaters provided to pierce the multi-layer structure.

The step of controlling may be achieved by further including controlling an amount of cooling air fed to a cooling air feeding tube provided to pierce the multi-layer structure to discharge the cooling air for cooling the plurality of individual single-layer thin film forming dies.

Each of the plurality of single-layer thin film forming dies may include an upstream-side single-layer forming die and a downstream-side single-layer forming die. An annular cooling air path may be formed between the upstream-side single-layer forming die and the downstream-side single-layer forming die. The step of controlling may be achieved by further including cooling the upstream-side single-layer forming die and the downstream-side single-layer forming die with the cooling air fed from the cooling air feeding tube and flowing through the annular cooling air path.

The lip main body is provided in a bottom portion of the forming die and has a lip portion having a second annular path connected to the first annular path so that the multi-layered thin film is outputted. The step of controlling is achieved by feeding bubble air to an air storage portion through a bubble air feeding tube provided to pierce the multi-layer structure to the air storage portion provided between the lip main body and the multi-layer structure; by controlling an amount of the bubble air fed to the air storage portion through the bubble air feeding tube; and by discharging the bubble air present in the air storage portion to an inner portion of the multi-layered thin film outputted from the second annular path through an air nozzle that pierces the lip portion to the air storage portion.

The step of controlling may be achieved by further including driving a band heater provided to an outer circumferential surface of at least one of the lip main body and the forming die to heat the bubble air present in the air storage portion.

The multi-layer blown film forming method may further include cooling the multi-layered thin film annular film on the downstream side of the forming die.

The step of cooling is achieved by carrying out first cooling to air-cool the multi-layered thin film annular film by using annular cooling air; by carrying out second cooling to cool the multi-layered thin film annular film by using an annular cooling water flow on a downstream side of the first cooling mechanism; by carrying out third cooling to cool the multi-layered thin film annular film by using cooling water spray on a downstream side of the second cooling mechanism.

The step of carrying out first cooling is achieved by feeding a cooling airflow to the annular air blow outlet to air-cool the multi-layered thin film annular film by using the cooling airflow fed from the annular air blow outlet; by adjusting an air flow rate of the cooling air in the midway of the air feeding tube; and by cooling the cooling airflow in a midway of the air feeding tube.

The step of carrying out second cooling is achieved by feeding first cooling water through a first cooling water feeding tube; by adjusting an air flow rate of the first cooling water in a midway of the first cooling water feeding tube; by cooling the first cooling water in a midway of the first cooling water feeding tube; by storing the first cooling water in a reservoir unit in a midway of the first cooling water feeding tube; and by cooling the multi-layered thin film annular film by using the first cooling water overflowing over a weir from the reservoir unit.

The step of carrying out third cooling is achieved by cooling the multi-layered thin film annular film by spraying second cooling water from the circumference of the multi-layered thin film annular film by means of a plurality of sprays; by feeding the second cooling water to the plurality of sprays through the second cooling water feeding tube; by adjusting the second cooling water flow rate of the second cooling water in a midway of the second cooling water feeding tube; and by cooling the second cooling water in a midway of the second cooling water feeding tube.

### Brief Description of Drawings

Fig. 1 is a cross sectional view showing an interior structure of a conventional multi-layered blown film forming apparatus;
Fig. 2 is a cross sectional view showing a cooling mechanism of a conventional multi-layered blown film forming apparatus;
Fig. 3 is a diagram showing the structure of a multi-layered blown film forming apparatus according to a first embodiment of the present invention;
Fig. 4 is a diagram showing a resin feeding tube group extending into a forming die from an adapter block of the multi-layered blown film forming apparatus according to the first embodiment;
Fig. 5 is a cross sectional view of the adapter block and a forming die of the multi-layered blown film forming apparatus according to the first embodiment;
Fig. 6 is a diagram showing a bottom of the forming die of the multi-layered blown film forming apparatus according to the first embodiment;
Fig. 7 is an enlarged cross sectional view of a portion B in the cross sectional view of Fig. 5;
Fig. 8 is a perspective view showing a sealing used in the multi-layered blown film forming apparatus according to the first embodiment;
Fig. 9A is an exploded perspective view showing a portion of a single-layer thin film forming die;
Fig. 9B is an exploded perspective view showing a portion of the single-layer thin film forming die;
Fig. 9C is an exploded perspective view showing a portion of the single-layer thin film forming die;
Fig. 9D is an exploded perspective view showing a portion of the single-layer thin film forming die;
Fig. 10 is a top view showing a downstream-side single-layer forming die;
Fig. 11 is a cross sectional front view showing a cross section of a cooling air feeding tube;
Fig. 12 is a cross sectional plan view showing a cross section of the cooling air feeding tube;
Fig. 13 is a perspective view showing a cartridge heater;
Fig. 14 is a cross sectional view showing a bubble air feeding tube;
Fig. 15 is a block diagram showing the configuration of a temperature controller circuit;
Fig. 16 is a block diagram showing a cooling unit of a multi-layered blown film forming apparatus according to a second embodiment of the present invention;
Fig. 17 is a cross sectional view showing an air-blow annular nozzle;
Fig. 18 is a cross sectional view showing a cooling water flow-down ring;
Fig. 19A is a view showing a conventional cooling unit;
Fig. 19B is a view showing the multi-layered blown film forming apparatus according to the second embodiment of the present invention; and
Fig. 19C is a graph showing a performance comparison.

### Best Mode for Carrying out the Invention

Hereinafter, a multi-layered blown film forming apparatus of the present invention will be described below with reference to the attached drawings.

### [First Embodiment]

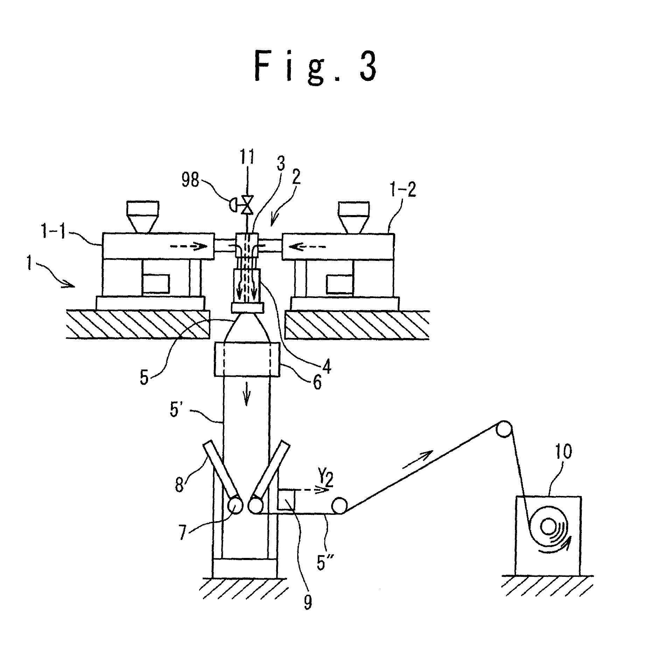

Fig. 3 is a diagram showing the structure of a multi-layered blown film forming apparatus according to the first embodiment of the present invention. Referring to Fig. 3, the multi-layered blown film forming apparatus of the first embodiment has a group of extruders 1 and a die 2. The group of extruders 1 has five extruders, specifically, first to fifth extruders 1-1 to 1-5 (Fig. 3 shows only the first and second extruders 1-1 and 1-2). Preferably, the extruders 1 are disposed in a same height position.

The die 2 has an adapter block 3 and a forming die 4. The adapter block 3 forms an axial-direction flow of the multiple types of resins, and the forming die 4 is disposed on the downstream side of the adapter block 3. The forming die 4 extrudes the multi-layer resin films in the axial direction, blows air, and serially forms a multi-layered thin conical film 5 (bubble film). A cooling unit 6 is disposed on the downstream side of the forming die 4.

The cooling unit 6 forms a multi-layered thin tubular film 5' by cooling the multi-layered thin conical film 5. The cooling unit 6 has an air blow function to blow a diagonal annular curtain airflow formed on a circumferential inner face of the multi-layered thin conical film 5 and a cooling function to cool the multi-layered thin conical film 5 while maintaining a conical surface shape of the multi-layered thin conical film 5 extruded from the forming die 4. The multi-layered thin tubular film 5' is flattened by a flattening device 8. A flat film flattened by the flattening device 8 is spliced by a nip roller pair 7. The nip roller pair 7 has an appropriate extruding speed. The appropriate extruding speed is an important parameter (design constant) that determines balancing with the circumference length, film thickness, and film mechanical properties of the multi-layered thin tubular film 5'. The appropriate extruding speed is proportional to a ratio (blow-up ratio) between the diameter of an extrusion port of the forming die 4 and the diameter of the multi-layered thin tubular film 5', and to an extrusion speed at which the forming die 4 extrudes the molten resin. The amount of air in a flattened multi-layered film 5' is controlled by an opening/closing degree of an air-amount adjustment valve 11 that adjusts the amount of air fed into the forming die 4 from the adapter block 3. A flattened multi-layered film 5" is wound by a winding unit 10. The fold width of the flattened multi-layered film 5" is detected by a fold-width detector 9.

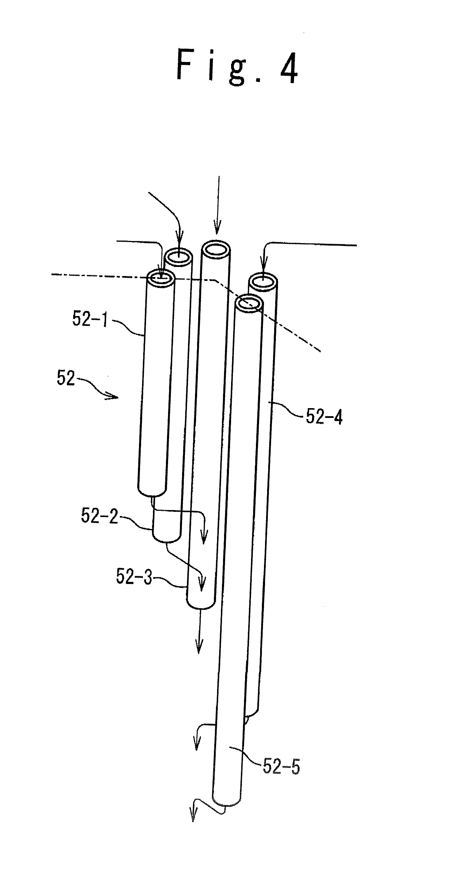

Fig. 4 is a perspective view showing a resin feeding tube group 52 extending into the forming die 4 from the adapter block 3. The resin feeding tube group 52 has five tubes, specifically, first to fifth resin feeding tubes 52-1 to 52-5. The first resin feeding tube 52-1 is shortest, and the fifth resin tube 52-5 is longest. Resins injected from the extruders 1-1 to 1-5 are fed to the single-layer forming dies in the forming die 4 through the first to fifth resin feeding tubes 52-1 to 52-5, respectively.

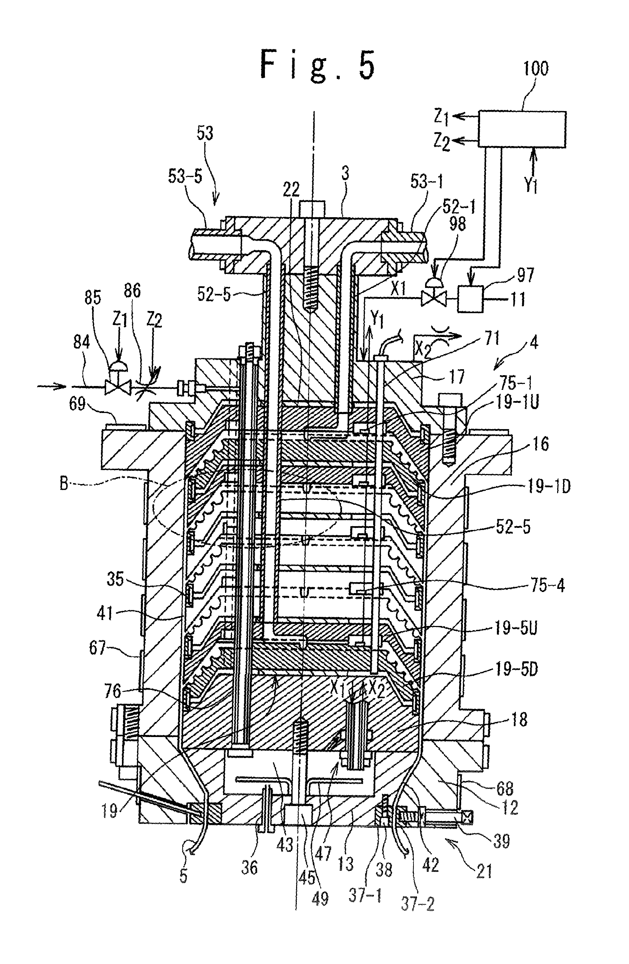

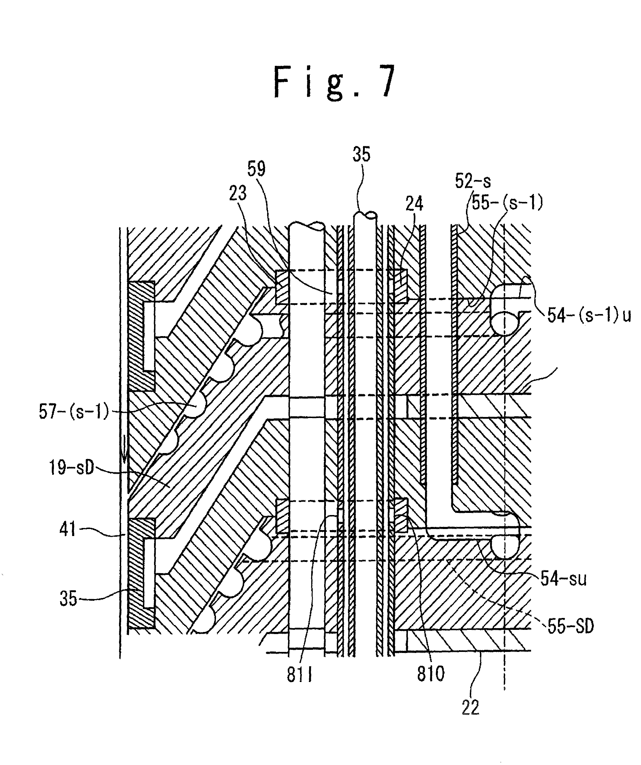

Fig. 5 is a cross sectional view of the adapter block 3 and the forming die 4 along a single-dotted chain line shown in Fig. 4. Fig. 7 is an enlarged view of a portion of the cross section shown in Fig. 5. Referring to Fig. 5, a group of five resin introduction tubes 53 (specifically, resin introduction tubes 53-1 to 53-5) are connected to the adapter block 3 to introduce the resins oncoming from the extruders 1-1 to 1-5. The resin introduction tubes 53-1 to 53-5 are respectively connected to the resin feeding tubes 52-1 to 52-5 in the adapter block 3.

The forming die 4 has a cylindrical die body 16, an upper die lid 17, and a lower die lid 18. The upper die lid 17 is disposed in contact with a lower end surface of the adapter block 3 and with an upper end surface of the cylindrical die body 16. The lower die lid 18 is disposed in contact with a lower end surface of the cylindrical die body 16. Five single-layer thin film forming dies 19 (specifically, single-layer thin film forming dies 19-1 to 19-5) constitute a multi-layer structure in a space formed by the cylindrical die body 16, the upper die lid 17, and the lower die lid 18.

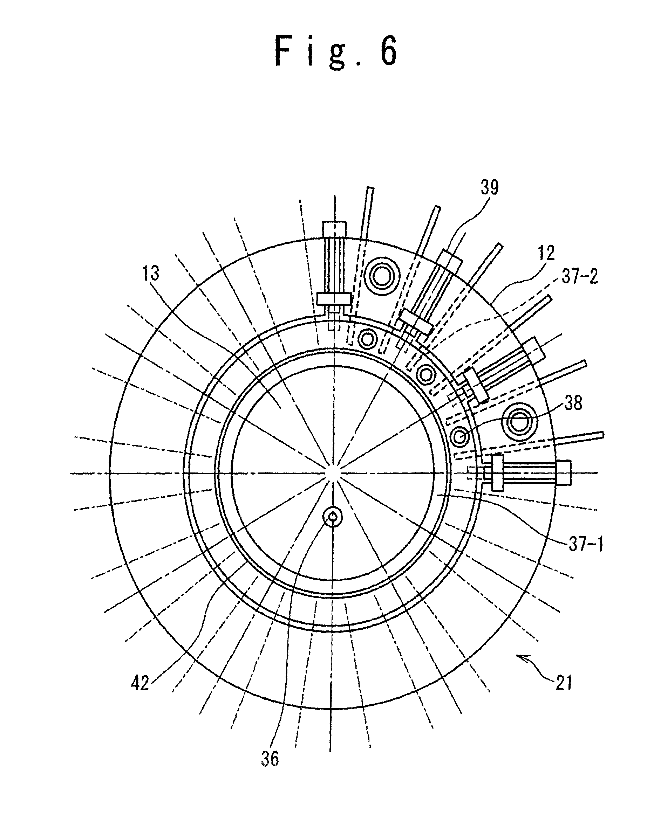

As shown in Figs. 5 and 6, a lip body 21 has an outer lip body 12 in contact with a lower end surface of the cylindrical die body 16, and an inner lip body 13 in contact with a lower end surface of the lower die lid 18. The lip body 12 is located in contact with a lower end surface of the lower die lid 18, and defines the diameter of a multi-layered thin conical film immediately after the extrusion from the forming die 4.

As shown in Fig. 5, band heaters 67 are provided in multiple stages around the outer circumferential surface of the cylindrical die body 16 in the axial direction. Band heaters 68 are provided on an outer circumferential surface of the outer lip body 12, and are used to heat, particularly, an air reserving section 43. A plate heater 69 is provided on an upper surface of an upper flange portion of the cylindrical die body 16. In this way, the forming die 4 is heated substantially from the overall outer circumferential surface, and the interior thereof is maintained to substantially a uniform temperature. Further, a plurality of cartridge heaters 71 are provided in the form of a bar-shaped heater unit, and are disposed to axially pierce the forming die 4. The air reserving section 43 and the cartridge heaters 71 will be described below in more detail.

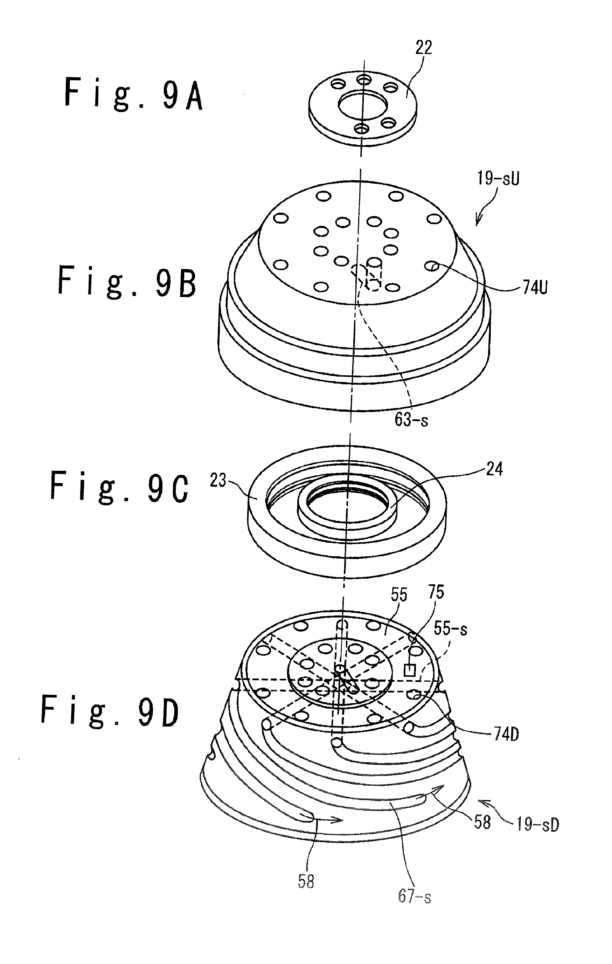

The single-layer thin film forming dies 19-1 to 19-5 constitute multi-layer structure of single-layer thin film forming dies in the axial direction. Figs. 9A to 9D are exploded perspective views of the individual single-layer thin film forming dies. Referring to Figs. 9A to 9D, of the single-layer thin film forming dies 19-1 to 19-5, an s-th single-layer thin film forming die 19-s has an annular thermal insulating unit 22, an upstream-side single-layer forming die 19-sU, an air sealing 23, a seal ring 24, and a downstream-side single-layer forming die 19-sD. The upstream-side single-layer forming die 19-sU and the downstream-side single-layer forming die 19-sD each have the shape of a truncated cone with a bottom portion where a recess portion shaped similar to the truncated cone shape is formed. The annular thermal insulating unit 22 is disposed coaxially with the upstream-side single-layer forming die 19-sU on a central portion of the upstream-side single-layer forming die 19-sU. In the annular thermal insulating unit 22, through-holes are provided to allow the five resin feeding tubes 52-1 to 52-5 for introducing the resins into the single-layer thin film forming dies 19-1 to 19-5 to pierce the annular thermal insulating unit 22. An upper portion of the downstream-side single-layer die 19-sD engages the recess portion of the upstream-side single-layer die 19-sU through the air sealing 23 and the seal ring 24, and an upper portion of an upstream-side single-layer forming die 19-(s+1)U engages with the recess portion of the downstream-side single-layer forming die 19-sD. A space defined by the air sealing 23 and the seal ring 24 between the upstream-side single-layer forming die 19-sU and the downstream-side single-layer forming die 19-sD functions as an annular cooling air path 59 (described below). In addition, eight through-holes are formed in the upstream-side single-layer forming die 19-sU to receive the resin feeding tubes 52-1 to 52-5. Five of the eight holes correspond to the holes formed in the annular thermal insulating unit 22. No unnecessary through-holes for resin feeding tubes are provided.

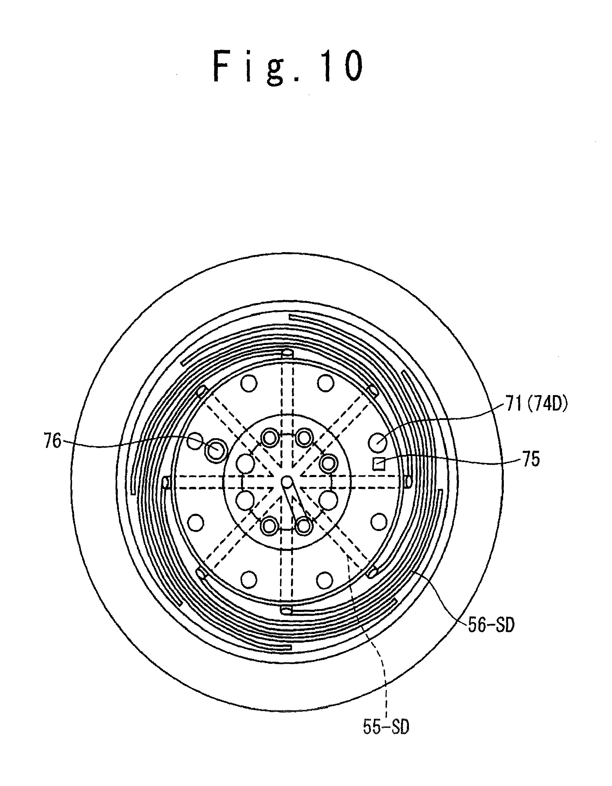

The single-layer thin film forming die 19-s is connected to a resin feeding tube 52-s through a connection hole provided for the upstream-side single-layer forming die 19-sU. As shown in Fig. 7, a molten resin flowpath 54-sU vertically extends from the connection hole, extends to the axial center in the bottom portion of the upstream-side single-layer forming die 19-sU, and then downwardly extends therefrom. The downstream-side single-layer forming die 19-sD has a connection hole in a central portion, and the connection hole of the die 19-sD is connected to the molten resin flowpath 54-sU extending from the upstream-side single-layer forming die 19-sU. The downstream-side single-layer forming die 19-sD has eight radially extending molten resin flowpaths 55-sD connected to the connection hole. Opposing end portions of each of the molten resin flowpaths 55-sD are opened on a conical-side surface of the downstream-side single-layer forming die 19-sD. The end portion is connected to a spiral flowpath 56-sD axially extending while rotating on the conical surface. Fig. 10 is a top view of the downstream-side single-layer forming die 19-sD and the cylindrical die body 16, and the molten resin flowpath 54-sU together shown. Spiral resin flowpaths 57-sD are formed by a side face of a bottom portion of the upstream-side single-layer forming die 19-sU and the spiral flowpath 56-sD. The spiral resin flowpath 57-sD has a component oriented to the downstream-side and a component oriented to the circumference direction, slowly and outwardly extends to the downstream-side, and is directed to a tangential direction 58 of a circle on a substantially rotation plane (plane perpendicular to the axial line) in an outer end portion. Outer ends of the plurality of spiral resin flowpaths 57-sD are each connected to an annular space 41 formed between the multi-layer forming die and an inner face of the cylindrical die body 16. The spiral resin flowpaths 57-sD are each formed to become narrower and shallower on the downstream side.

As shown in Fig. 9B, the upstream-side single-layer forming die 19-sU has a flat truncated conical face. Such a truncated conical face of an upstream-side single-layer forming die 19-1U is connected to a bottom wall of the upper die lid 17 through the annular thermal insulating unit 22. Steps are formed in the lower side of the side face of the upstream-side single-layer forming die 19-sU.

A circumferential edge of the upper truncated cone face of the downstream-side single-layer forming die 19-sD has an upwardly extending protrusion. This forms a recess portion in a central portion of the upper truncated cone face of the downstream-side single-layer forming die 19-sD. Additionally, a groove is formed in an outer peripheral portion of the central portion. Similarly, a recess portion is formed in the recess portion continuing from the bottom portion of the upstream-side single-layer forming die 19-sU in correspondence with the recess portion in the central portion in the upper truncated cone face of the downstream-side single-layer forming die 19-sD. The air sealing 23 is arranged between the upstream-side single-layer forming die 19-sU and the downstream-side single-layer forming die 19-sD in such a way that the air sealing 23 is arranged to tightly engage outer circumference sides of the recess portions of the upstream-side single-layer forming die 19-sU and the downstream-side single-layer forming die 19-sD. In addition, the seal ring 24 is disposed on the inner circumference side of the recess portion. With the air sealing 23 and the seal ring 24, the annular cooling air path 59 is formed. The air sealing 23 and the seal ring 24 blocks the airflow from the outside of the single-layer thin film forming die 19-s to a region between the upstream-side single-layer forming die 19-sU and the downstream-side single-layer forming die 19-sD, or blocks a counterflow backflow therefrom. The flowing of the cooling air into the annular cooling air path 59 enables the single-layer thin film forming die 19-s to be uniformly cooled.

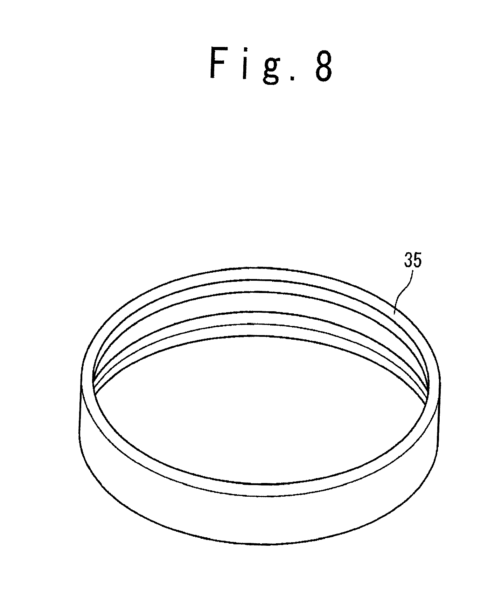

A step-like recess portion is formed in a lower end portion of the downstream-side single-layer forming die 19-sD. Thereby, a sealing 35 shown in Fig. 8 is disposed to engage the recess portion of the lower end portion of the downstream-side single-layer forming die 19-sD and the step located in the lower portion of the side face of the upstream-side single-layer forming die 19-(s+1)U. As shown in Fig. 7, the sealing 35 restrains heat conduction between the downstream-side single-layer forming die 19-sD and the upstream-side single-layer forming die 19-(s+1)U, and concurrently, prevents the resin to flow to therebetween.

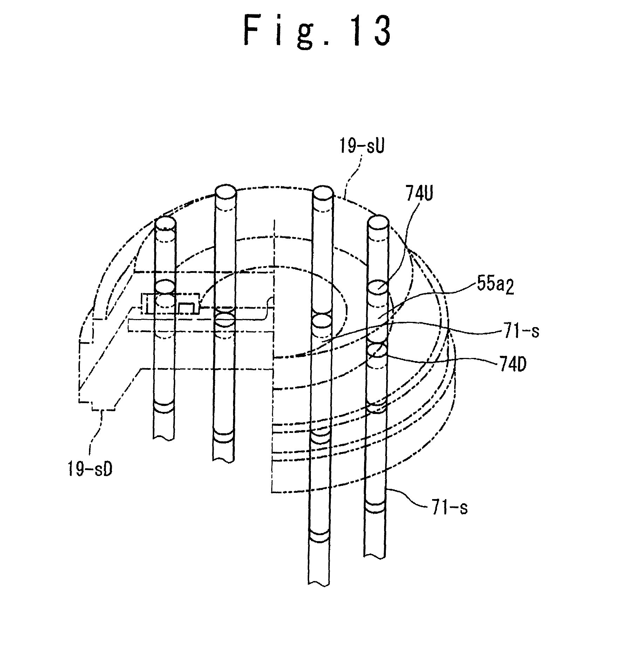

As shown in Fig. 13, the cartridge heater 71 is inserted into a heater mounting hole 74U axially extending through the single-layer thin film forming die 19-sU and a heater mounting hole 74D axially extending through the single-layer thin film forming die 19-sD. Such cartridge heaters 71 as shown are disposed symmetric with respect to the axial center on one circumference in the forming die 4. Alternatively, the cartridge heaters 71 may be disposed on a concentric circle. The cartridge heater 71 has high thermal conductivity, heat resistance, and dielectric strength and has a heat generating tube that is provided in a height position corresponding to a predetermined one of the single-layer thin film forming dies 19-s. The heat generating tube generates heat upon reception of power supply from an electrical conductor present inside of the cartridge heater 71, thereby to heat the single-layer thin film forming die 19-s. Thus, the cartridge heaters 71 are provided to the plurality of single-layer thin film forming dies 19-s. The single-layer thin film forming dies 19-s accordingly can be independently heated.

As shown in Fig. 10, a temperature sensor 75-s is provided in the vicinity of a plurality of radial directional flow forming flowpaths 55-s of the single-layer thin film forming die 19-sD to detect the temperature of a resin flow to the respective radial directional flow forming flowpath 55-s. In the present embodiment, a single temperature sensor 75-s is provided corresponding to one downstream-side single-layer forming die 19-sD. However, a plurality of temperature sensors may be provided.

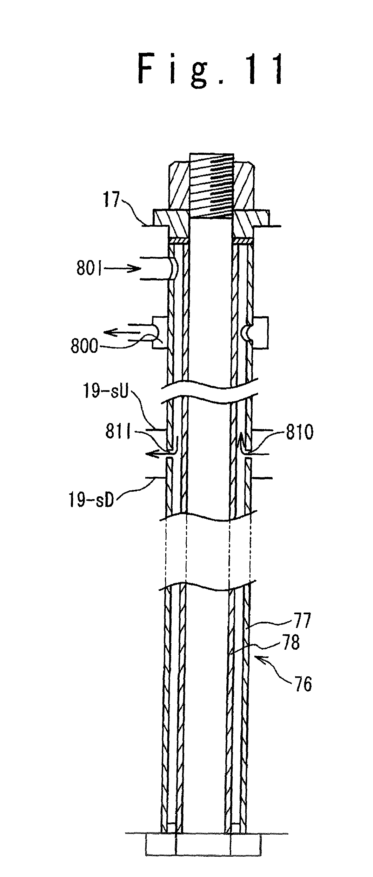

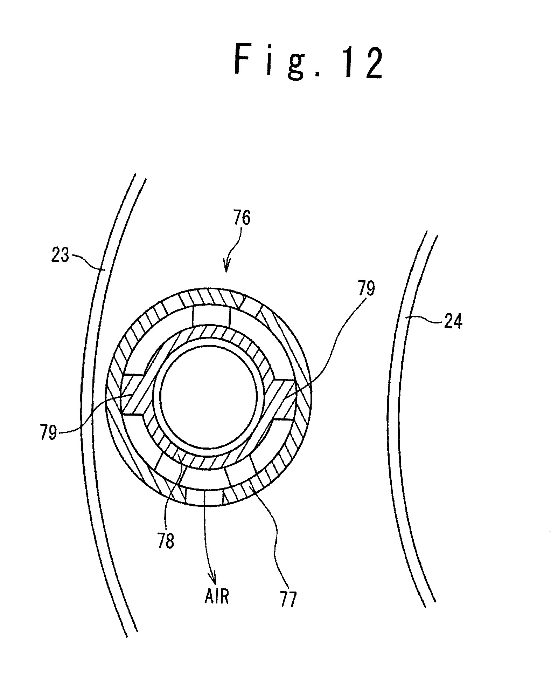

As shown in Fig. 7, the annular cooling air path 59 is defined by the air sealing 23 and the seal ring 24. Figs. 11 and 12 show a cooling air feeding tube 76. The cooling air feeding tube 76 is a duplex tube formed of an outer tube 77 and an inner tube 78. As shown in Fig. 12, a pair of protrusions 79 are formed continually in the axial direction in the inner tube 78, and a portion between the outer tube 77 and the inner tube 78 is divided into two portions, i.e., an air feeding portion and an air discharging portion. The outer tube 77 has an air introduction opening 80I for introducing air into the air feeding portion, and an air discharge opening 800 connected with the air discharging portion. In addition, the outer tube 77 has an air introduction opening 81I for introducing cooling air into the annular cooling air path 59, and an air discharge opening 810 for discharging the cooling air from the annular cooling air path 59. These openings 81I and 810 are formed at a height specifically set for the outer tube 77 corresponding to the single-layer thin film forming die 19-s. In the present embodiment, the single cooling air feeding tube 76 is provided to pierce the single-layer thin film forming dies 19 of the multi-layer structure. As is shown in Fig. 5, a shutoff valve 85 and a throttle valve 86 are interposed in a feeding path that feeds a cooling air 84 into the air introduction opening 80I. The distance between the air introduction opening 81I or the air discharge opening 810 and a reference plane of the upper die lid 17 is represented as a+(s-1)b. In the expression, a is a constant, b is an axial direction distance of the vertically adjoining the single-layer thin film forming dies 19-s and 19-(s-1). A flow regulating throttle valve 86 is preferably interposed between the shutoff valve 85 and the air introduction opening 81I. When the temperature of a resin of a different type is independently set, a plurality of cooling air feeding tubes 76 are preferably provided. This enables a throttle degree of the flow regulating throttle valve 86 and the heating level of the heater 71 to be independently controlled in units of the die layers.

Referring to Fig. 5, a lip 37 is fitted into the lower end surface sides of the outer lip body 12 and the inner lip body 13 forms a portion of a discharge orifice. The lip 37 constitutes a part of orifice described above. A portion of an annular space 42 connected to the annular space 41 is formed in the lip 37. As shown in Fig. 5, the lip 37 is formed of an inner ring 37-1 and an outer ring 37-2. A portion of the annular space 42 is formed as a space between the inner ring 37-1 and the outer ring 37-2. The inner ring 37-1 is adjusted for the axial direction position thereof by a first adjustment bolt 38 directed to the axial direction. The outer ring 37-2 is adjusted for a radial direction position thereof by a second adjustment bolt 39 directed to the radial direction. The thickness of the multi-layered thin conical film 5 can be adjusted through positional adjustment of the lip 37. A heat controller unit (not shown) carries out temperature control of the lip 37 through the heaters 68 and 69 when the heat controller unit receives a thickness signal outputted by a thickness meter that measures the thickness of the flattened multi-layered film 12 after the multi-layered thin tubular film 5' has been cooled and solidified. Expansion and contraction of the lip 37 undergoing the temperature control controls a lip portion of a second molten resin multi-layer film formation annular space 25.

As shown in Fig. 5, the inner lip body 13 is secured to the lower die lid with an axial direction bolt 45. On the lower end surface side of the lower die lid 18, the air reserving section 43 is formed between the lower die lid 18 and the inner lip body 13. An air nozzle 36 is mounted to pierce the inner lip body 13. The air nozzle 36 injects compressed air reserved in the air reserving section 43 into an interior space of the multi-layered thin conical film 5 on the lower end surface side of the inner lip body 13. A lower end opening of a bubble air feeding tube 47 is opened in the air reserving section 43. A baffle plate 49 is formed to extend in a centrifugal direction and to be axial-center symmetric to the air reserving section 43. The baffle plate 49 has a static-pressure effect of refraining dynamic pressure from occurring on an inner opening end face of the air nozzle 36. In addition, the baffle plate 49 has a heating effect of increasing the bubble air, which is discharged into the interior space of the multi-layered thin conical film 5, to the temperature of the multi-layered thin conical film 5 extruded from the annular space 42.

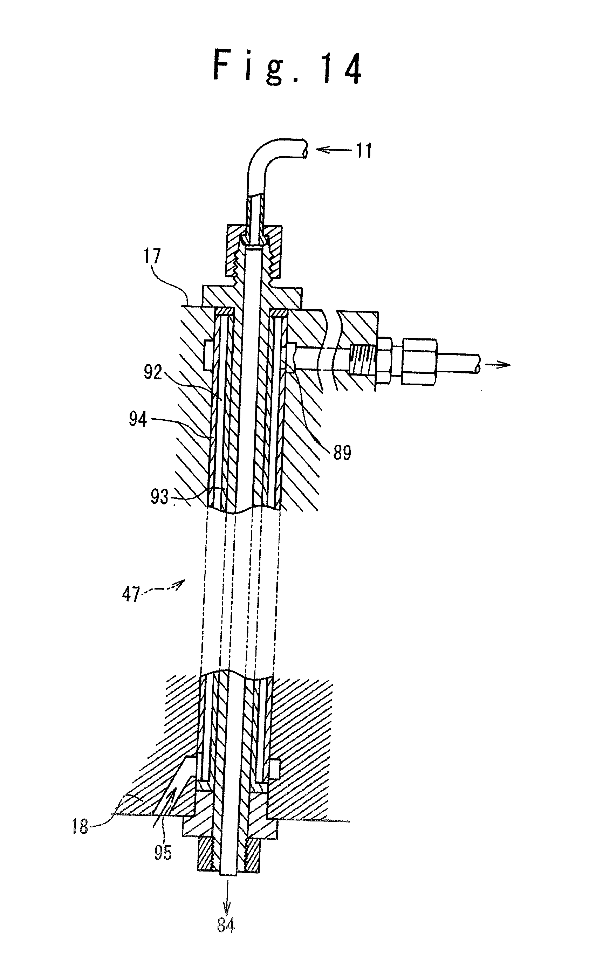

Referring to Fig. 14, the babble air is introduced into the air reserving section 43 and is passed through an annular path 92 between an outer tube 94 and an inner tube 93 from a hole 95 opened in the lower die lid 18. Then, the air is throttled by a throttle valve (not shown) interposed in a discharge tube, and is discharged through an outlet 89. When the diameter of the multi-layered thin tubular film 5' becomes small, the air pressure is adjusted by an air pressure regulation valve 97. Then, a shutoff valve 98 disposed on the downstream side of the air pressure regulation valve 97 is controlled to open, whereby an intra-valve air volume is increased.

Referring back to Fig. 5, the annular space 41 is formed between a cylindrical outer circumferential surface of the multi-layer structure of the single-layer thin film forming dies 19 and a cylindrical inner circumferential surface of the cylindrical die body 16. The annular space 41 thus formed defines an appropriate outer diameter size of the multi-layered thin conical film 5 and an appropriate wall thickness thereof. The annular space 42 is formed between the outer circumferential surface of the inner lip body 13 and the inner circumferential surface of the outer lip body 12. The annular space 42 thus formed defines an appropriate outer diameter size of a multi-layered molten resin thin film formed from the above-described film, an appropriate wall thickness thereof, and an appropriate discharge angle thereof. The upstream-side annular space 41 is continually connected to the downstream-side annular space 42. The annular space 42 is continually reduced or enlarged in diameter toward the downstream side (reduced in the shown example), thereby forming the discharge orifice for adjusting the diameter of the multi-layered thin conical film 5 extruded from the outer lip body 12.

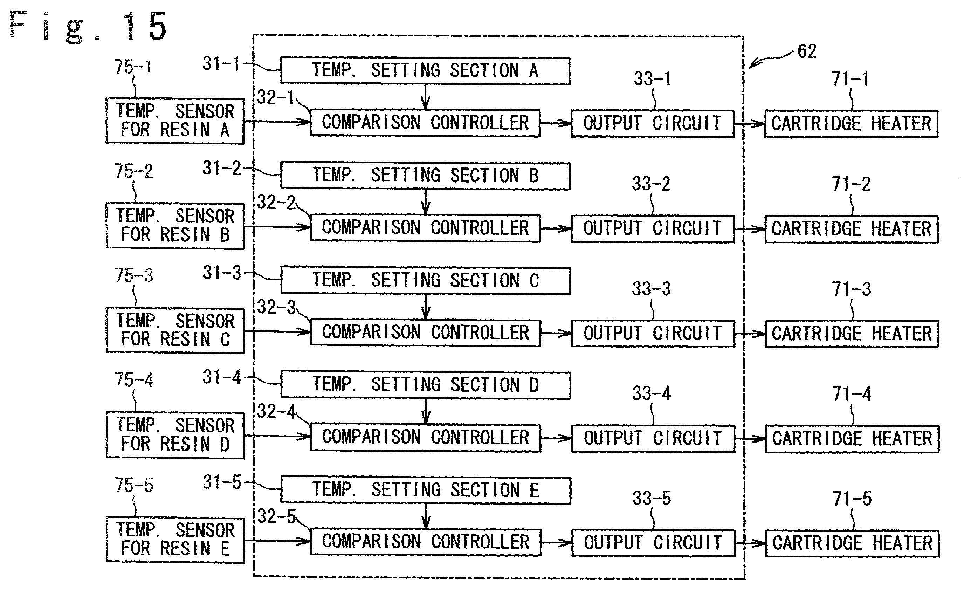

Fig. 15 shows a controller circuit 100. The controller circuit 100 controls to the shutoff valve 85 and the flow regulating throttle valve 86, thereby to control an amount of air fed to the cooling air feeding tube 76. The controller circuit 100 further controls the air pressure regulation, valve 97, the shutoff valve 98, and the like, thereby to control an amount of air fed to the bubble air feeding tube 47. Under the control, the multi-layer structure of the single-layer thin film forming dies 19-s is cooled by the cooling air. The controller circuit 100 further controls the band heaters 67, 68, and 69, thereby to heat the forming die 4. Further, the controller circuit 100 has a temperature controller section 62, which independently controls the temperature of the single-layer thin film forming die 19-s of the multi-layer structure. The temperature controller section 62 has, therefore, a desired-temperature setting unit 31-s, a comparison controller 32-s, and an output circuit 33-s for the respective single-layer thin film forming die 19-s. The comparison controller 32-s carries out a comparison between a temperature obtained from the temperature sensor 75-s provided in the single-layer thin film forming die 19-s and a temperature set by the desired-temperature setting unit 31-s, and outputs a result of the comparison to the output circuit 33-s. The output circuit 33-s drives a corresponding one 71-s of the cartridge heaters 71 thereby to heat the single-layer thin film forming die 19-s in accordance with the result of the comparison. Since the cooling air discharged from the cooling air feeding tube 76 circulates through the annular cooling air path 59, the single-layer thin film forming die 19-s is cooled to a lower temperature than the set temperature. The temperature controller section 62 drives the cartridge heater 71, which is provided for the respective single-layer thin film forming die 19-s, thereby to heat the respective single-layer thin film forming die 19-s to the set temperature. The forming temperature for the resin film is thus controlled.

A first-type molten resin introduced into the resin introduction tube 53-1 is guided by the resin feeding tube 52-1, passed through the molten resin flowpath 54-1U of the upstream-side single-layer forming die 19-1U, transferred to the connection hole of the downstream-side single-layer forming die 19-1D, and distributed to the plurality of spiral resin flowpaths 57-1D through the molten resin flowpath 55-1D. Thereby, the first-type molten resin is extruded in the tangential direction to the annular space 41. A second-type molten resin is guided by the resin feeding tube 52-2, passed through the molten resin flowpath 54-2U of the upstream-side single-layer forming die 19-2U, transferred to the connection hole of the downstream-side single-layer forming die 19-2D, and distributed to the plurality of spiral resin flowpaths 57-2D through the molten resin flowpaths 55-2D. Thereby, the second-type molten resin is extruded in the tangential direction to the annular space 41. A third-type molten resin is guided by the resin feeding tube 52-3, passed through the molten resin flowpath 54-3U of the upstream-side single-layer forming die 19-3U, transferred to the connection hole of the downstream-side single-layer forming die 19-3D, and distributed to the plurality of spiral resin flowpaths 57-3D through the molten resin flowpaths 55-3D. Thereby, the third-type molten resin is extruded in the tangential direction to the annular space 41. A fourth-type molten resin is guided by the resin feeding tube 52-4, passed through the molten resin flowpath 54-4U of the upstream-side single-layer forming die 19-4U, transferred to the connection hole of the downstream-side single-layer forming die 19-4D, and distributed to the plurality of spiral resin flowpaths 57-4D through the molten resin flowpaths 55-4D. Thereby, the fourth-type molten resin is extruded in the tangential direction to the annular space 41. A fifth-type molten resin is guided by the resin feeding tube 52-5, passed through the molten resin flowpath 54-5U of the upstream-side single-layer forming die 19-5U, transferred to the connection hole of the downstream-side single-layer forming die 19-5D, and distributed to the plurality of spiral resin flowpaths 57-5D through the molten resin flowpaths 55-5D. Thereby, the fifth-type molten resin is extruded in the tangential direction to the annular space 41.

As shown in Fig. 5, molten resins of types different from one another are fed to the single-layer thin film forming dies 19-s through the resin feeding tubes 52-s different in length from one another, and are extruded to the annular space 41 from the spiral resin flow paths 57-sD at different height positions. No event occurs that the different molten resins are mixed before arriving at the annular space 41. More specifically, a second resin extruded in the tangential direction from the spiral resin flowpaths 57-2D at a second height position is not mixed into an inner surface of a first tubular resin thin film formed by extruded into the annular space 41 from the spiral resin flowpaths 57-1D at the first height position, and the second resin as a second layer is bonded to the inner surface side of the first tubular resin thin film. In this manner, a second tubular resin film is formed. Similarly, a third resin extruded in the tangential direction from the spiral resin flowpaths 57-3D at the third height position is not mixed into an inner surface of a second tubular resin thin film, and a third tubular resin film is formed on the inner surface side of the second tubular resin thin film. A fourth resin extruded in the tangential direction from the spiral resin flowpaths 57-4D at the fourth height position is not mixed into an inner surface of a third tubular resin thin film, and a fourth tubular resin film is formed on the inner surface side of the third tubular resin thin film. A fifth resin extruded in the tangential direction from the spiral resin flowpaths 57-5D at the fifth height position is not mixed into an inner surface of a fourth tubular resin thin film, and a fourth tubular resin film is formed on the inner surface side of the fourth tubular resin thin film. The multi-layered thin conical film 5 thus formed is discharged as a five-layered resin thin film from the lip portion of the annular space 42. Bubble air is introduced from the air nozzle 36 into the inner space of the multi-layered thin conical film 5, and the multi-layered thin conical film 5 is retained as an inflated form having a diameter that is defined. In a course toward the cooling unit 6, the inflated form successively undergoes diameter-enlarging operations, thereby to be further thin filmed. The width of the multi-layered thin conical film 5 extruded from the lip portion of the annular space 42 is adjusted by the amount of the bubble air discharged from the bubble air feeding tube 47 and the pressure of the air.

The upper die lid 17 and the first single-layer thin film forming die 19-1 may be formed into a unitary structure. Similarly, the lower die lid 18 and the fifth single-layer thin film forming die 19-5 may be formed into a unitary structure. Such unitary structuring simplifies the die structure of the forming die 4, therefore enabling reducing the number of assembly steps. In the above-described construction, the first single-layer thin film forming die 19-1 is disposed on the upper side, and the fifth single-layer thin film forming die 19-5 is disposed on the lower side. However, the construction may be modified such that the upstream side and the downstream side are disposed in the horizontal direction, wherein the multi-layered thin conical film 5 is extruded in the horizontal direction.

The distance between the downstream-side opening end of the molten resin flow path 54-sU of the resin feeding tube 52 of the number corresponding to the layer number and the reference position is represented by a mathematical expression similar to the above-described mathematical expression representing the distance between the air introduction opening 81I of the cooling air feeding tube 76. The bubble air feeding tube 47 and the cooling air feeding tube 76 are disposed to pierce the interior of the forming die 4, and are tightened with bolts at both ends. In this manner, the single-layer thin film forming dies 19 of the multi-layer structure are tightened in the axial direction into a unitary structure, so that the single-layer thin film forming dies 19 are structurally steady. The forming die 4 is arranged into a unitary structure in the following manner. The upper die lid 17 and the cylindrical die body 16 are bolted to be united; the cylindrical die body 16, the inner lip body 13, and the outer lip body 12 are bolted to be united; and the multi-stage structure of the single-layer thin film forming dies 19-s are aligned in concentricity with the bubble air feeding tube 47 and the cooling air feeding tube 76. In the unitary structure, the single-layer thin film forming dies 19 are controlled to appropriate temperatures in units of the die layer, thereby to enable enhancing quality of the multi-layered film. Consequently, according to the multi-layered blown film forming apparatus and multi-layer blown film forming method of the present invention, the multi-layer structure die is recognized as a unitary temperature control unit, and total and consistent temperature control therefor is implemented.

### [Second Embodiment]

The cooling unit 6 cools and transfers the multi-layered thin tubular film 5' changed from the multi-layered thin conical film 5. The multi-layered thin tubular film 5' flattened by the flattening device 8. A flattened film 5" flattened by the flattening device 8 is sealed by the nip roller pair 7. The nip roller pair 7 has an appropriate extruding speed. The appropriate extruding speed is proportional to the ratio (blow-up ratio) between the diameter of the extrusion port of the forming die 4 and the diameter of the multi-layered thin tubular film 5', and to an extrusion speed rate at which the multi-layered thin conical film 5 extrudes the molten resin. In addition, the appropriate extruding speed is an important parameter that determines balancing with the circumference length, film thickness, and film mechanical properties of the multi-layered thin tubular film 5'. The flattened film 5" processed through the nip roller pair 7 is wound by the winding unit 10.

The amount of air 90 introduced into the forming die 4 is controlled by opening/closing operation of the shutoff valve 98. The control of the amount of air introduced through the air feeding tube 47 into the forming die 4 is carried out based on control of the blow-up ratio, which is a diameter-enlargement degree, of the forming die 4. The fold width of the flattened film 5" is detected by the fold-width detector 9.

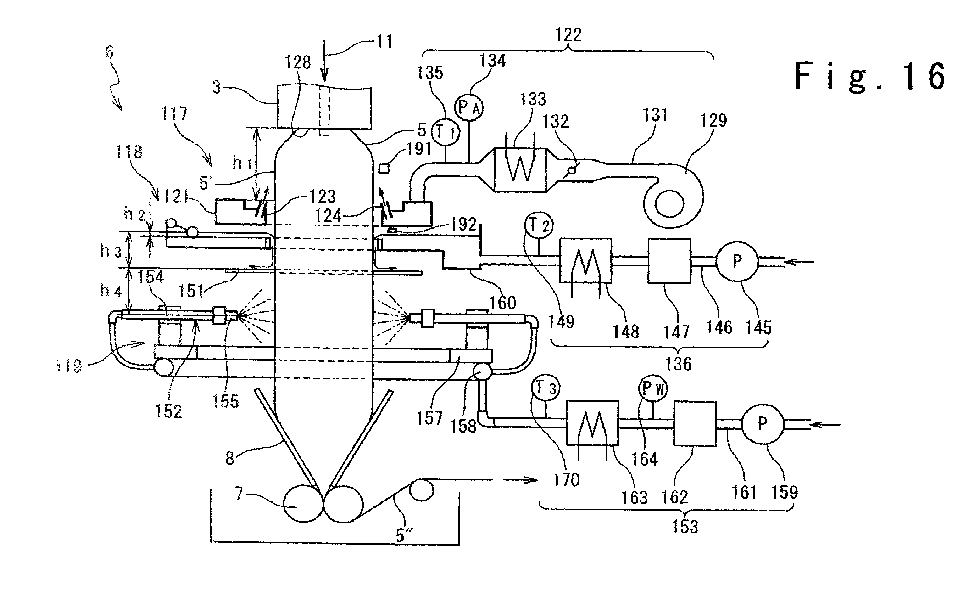

Fig. 16 shows in detail the cooling unit 6 that cools the multi-layered thin tubular film 5' while maintaining the bubble shape. The cooling unit 6 has a cooling mechanism that carries out three-stage cooling. The cooling mechanism has a first cooling mechanism 117, a second cooling mechanism 118, a third cooling mechanism 119. In addition, radiation thermometers 191 and 192 are provided. The radiation thermometer 191 is provided on the upstream side of the first cooling mechanism 117, and the radiation thermometer 192 is provided on the downstream side of the first cooling mechanism 117 and on the upstream side of the second cooling mechanism 118.

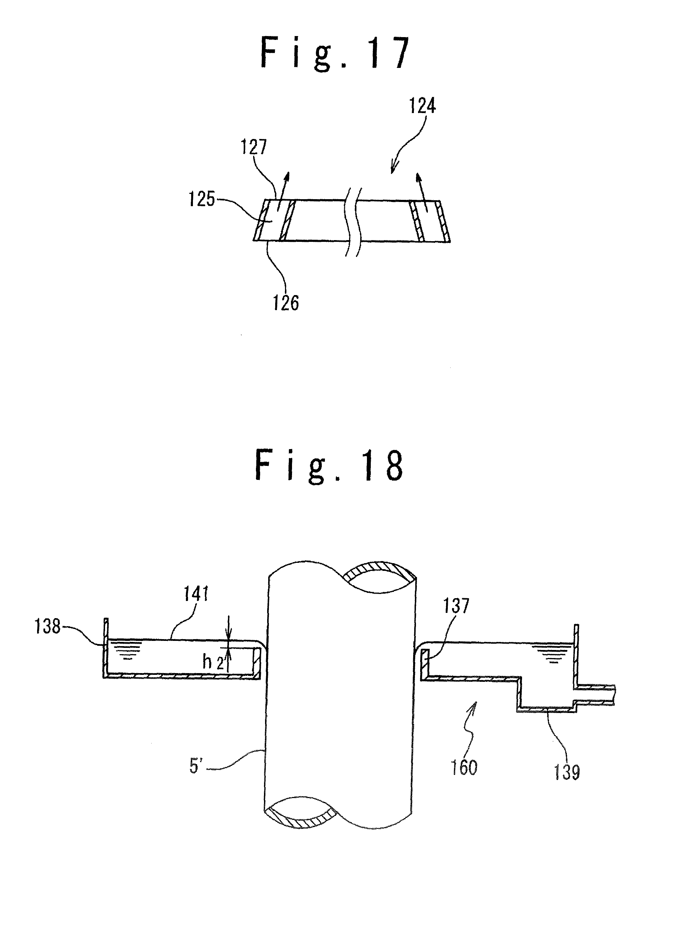

The first cooling mechanism 117 has an air spray ring 121, which annularly sprays the cooling air on a tubular portion of the multi-layered thin tubular film 5', and an air feed amount mechanism 122. A central opening 123 is formed in the air spray ring 121. The tubular portion of the multi-layered thin tubular film 5' is brought into proximity to an inner face of the central opening 123 of the air spray ring 121 and is thereby pushed down to suspend. An air-blow annular nozzle 124 is disposed on an upper circumferential edge of the central opening of the air spray ring 121. The air-blow annular nozzle 124 is formed as shown in Fig. 17. An annular cooling airflow blown off from the air-blow annular nozzle 124 has a centralizing component and an upward component, and is directed obliquely upward. A lower annular opening 126 of the air-blow annular nozzle 124 is open in the air spray ring 121, and an upper-side annular opening 127 is open in an outer side of the air spray ring 121 in the direction to the tubular portion of the multi-layered thin tubular film 5'.

As shown in Fig. 16, a downstream-side end face of the forming die 4 is defined to be a reference height position 128. The distance in the height direction between the reference height position 128 and an upper-side annular opening 127 of the air spray ring 121 is set to h1. The height position of the air spray ring 121 is adjustable by a vertical position adjusting unit (not shown). The vertical position adjusting unit has a known linear feeding mechanism formed of a combination of a rotational screw and a nut. The rotational screw is used to adjust the height in an axial direction with respect to the main body of the multi-layered blown film forming apparatus. The nut engages the rotational screw and is secured to the air spray ring 121. The height-direction distance h1 is positionally adjusted by the vertical-position adjusting unit.

The air feed amount mechanism 122 includes a blower 129 and an air feed duct 131 that connects the blower 129 to the air spray ring 121. An adjustment damper 132 for adjusting the feed flow rate and a first heat exchanger 133 are interposed in the air feed duct 131. The first heat exchanger 133 cools air fed from the blower 129 to an appropriate temperature. An air pressure sensor 134 and an air temperature sensor 135 are interposed in the air feed duct 131 between the first heat exchanger 133 and the air spray ring 121. The air pressure sensor 134 detects the pressure of air introduced to the air spray ring 121. The air temperature sensor 135 detects the temperature of air introduced to the air spray ring 121.

The temperature of the multi-layered thin tubular film 5' is measured by the radiation thermometer 191. The adjustment damper 132 is controlled to increase the cooling air flow rate when the measured temperature is higher than a desired temperature having been set. On the other hand, if the measured temperature is lower than the desired temperature, the adjustment damper 132 is controlled to reduce the cooling air flow rate.

The second cooling mechanism 118 has a reservoir unit, which causes cooling water to flow down to the tubular portion of the multi-layered thin tubular film 5', and a first cooling water feed amount mechanism 136. The reservoir unit is formed to serve as a cooling water flow down ring 160. The cooling water flow down ring 160 is disposed on the downstream side of the air spray ring 121. As shown in Fig. 18, a cooling water overflow weir 137 is formed on a central-opening upper-side circumferential edge of the cooling water flow down ring 160. The height of a cylindrical receptacle wall 138 of the cooling water flow down ring 160 is set to a position higher than an upper end surface of the cooling water overflow weir 137. The cooling water is introduced from an introduction opening of a lower portion 139 of the cooling water flow down ring 160. A cooling water level 141 in the cooling water flow down ring 160 is detected by a water level sensor (not shown). The cooling water flow down ring 160 is mounted in a specified height position. As shown in Fig. 18, an overflow height between the water level 141 and the upper end surface of the cooling water overflow weir 137 is set to h2.

The first cooling water feed amount mechanism 136 includes a first pump 145 and a first cooling water feed conduit 146 connecting the first pump 145 to the cooling water flow down ring 160. A first flow regulating valve 147 for regulating a feed water volume and a second heat exchanger 148 are interposed in the first cooling water feed conduit 146. The second heat exchanger 148 cools the cooling water fed from the first pump 145 to an appropriate temperature. A first cooling water temperature sensor 149 is interposed in the first cooling water feed conduit 146 between the first flow regulating valve 147 and the cooling water flow down ring 160. The first cooling water temperature sensor 149 detects the temperature of first cooling water introduced to the cooling water flow down ring 160.

The temperature of the multi-layered thin tubular film 5' is measured by the radiation thermometer 192. The first flow regulating valve 147 is controlled to increase the cooling air flow rate when the measured temperature is above a desired temperature having been set. On the other hand, if the measured temperature is below the desired temperature, the first flow regulating valve 147 is controlled to reduce the cooling air flow rate.

Thus, according to the present embodiment, although the two radiation thermometers 191 and 192 are used, any one of them may be used. In this case, control using the radiation thermometer is carried out.

Additionally included in the cooling unit 6 is a dewatering unit 151. The dewatering unit 151 may be formed as a dewatering ring board. A radial-direction clearance between a central opening of the dewatering unit 151 and a tubular peripheral surface of the multi-layered thin tubular film 5' is appropriately small. The height between the upper surface of the dewatering unit 151 and the cooling water flow down ring 160 is set to h3. The height position of the dewatering unit 151 is adjustable by another vertical-position adjusting unit (not shown) having the same structure as the first vertical-position adjusting unit described above. In this way, the height of the dewatering unit 151, that is, the height h3, is appropriately controlled. This enables the transparency of a post-cooling film to be enhanced.

With the dewatering unit 151, water removal is carried out to remove moisture as much as possible. The dewatering unit 151 is used for cooling for the reason that the cooling efficiency is low water even when the cooling water is sprayed in a portion where warm water is present. Discharged water is not simply discharged, but also the discharged water is stored in a reservoir unit (not shown). The water in the reservoir unit is the next third cooling mechanism 119. In this manner, resources can be effectively used, and consequently, the costs can be reduced.

The third cooling mechanism 119 has a cooling water spray units 152 and a second cooling water feed amount mechanism 153. A plurality of cooling water spray nozzle tubes 154 of the cooling water spray units 152 are radially disposed with the tubular portion of the multi-layered thin tubular film 5' in the center. Cooling water discharge nozzles 155 are replaceably disposed to respective end portions of the plurality of cooling water spray nozzle tubes 154. The cooling water spray nozzle tubes 154 are fixedly disposed and supported by a common support ring 157. The cooling water is distributedly fed to the plurality of cooling water spray nozzle tubes 154 from a cooling water distribution annular tube 158 secured to the common support ring 157.

The second cooling water feed amount mechanism 153 includes a second pump 159 and a second cooling water feed conduit 161 connecting the second pump 159 to the cooling water distribution annular tube 158. A second flow regulating valve 162 for regulating a feed water volume and a third heat exchanger 163 are interposed in the second cooling water feed conduit 161. The third heat exchanger 163 cools the cooling water fed from the second pump 159 to an appropriate temperature. A cooling water pressure sensor 164 and a second cooling water temperature sensor 170 are interposed in the second cooling water feed conduit 161 between the third heat exchanger 163 and the cooling water distribution annular tube 158. The cooling water pressure sensor 164 detects the pressure of second cooling water introduced to the cooling water distribution annular tube 158. The second cooling water temperature sensor 170 detects the temperature of second cooling water introduced to the cooling water distribution annular tube 158.

The height between the water drain unit 151 and a spray center line of the cooling water discharge nozzles 155 is set to h4. The height h4 is positionally adjusted by a third vertical-position adjusting unit having the same structure as the first vertical-position adjusting unit described above.

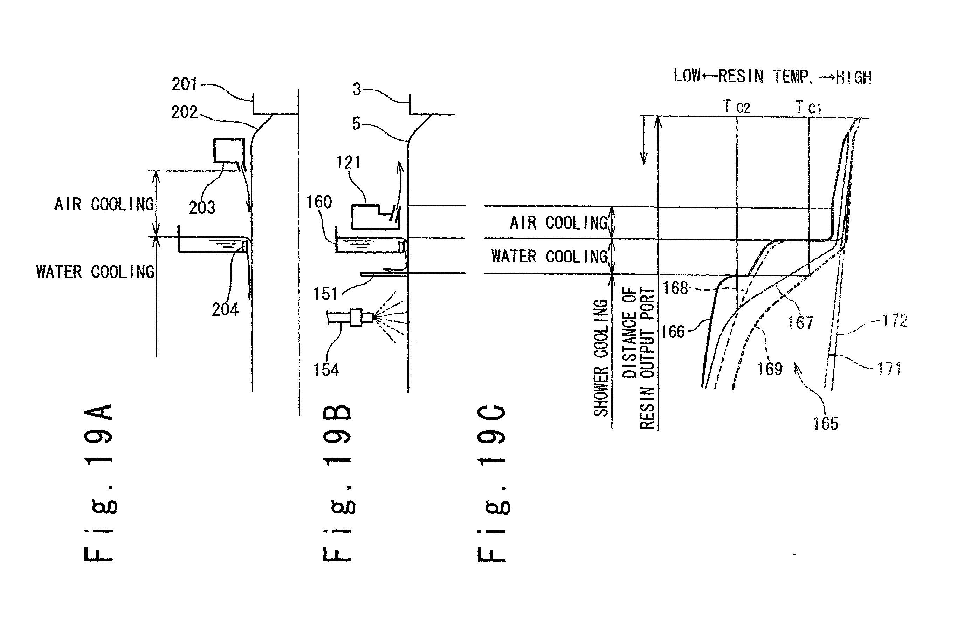

Figs. 19A to 19C show an experimental example of multi-layered-film blow forming according to the present invention. Fig. 19C is a graph showing the relationships between the advancement distance and temperature falls of the tubular portion of the multi-layered thin tubular film 5' according to three cooling methods different from one another. In addition, Fig. 19C shows a comparison between three-stage cooling units 121, 160, and 154 according to the present invention and the conventional apparatuses, two-stage cooling units 203 and 204. A first temperature curve 166 of the graph represents temperature falls of a resin outer layer of the tubular portion of the multi-layered thin tubular film 5' cooled by the three-stage cooling (air cooling, water cooling, and shower cooling) according to the present invention. A second temperature curve 167 of the graph represents temperature falls of a resin inner layer of the tubular portion of the multi-layered thin tubular film 5' cooled by the three-stage cooling. A third temperature curve 168 of the graph represents temperature falls of the resin outer layer of the tubular portion of the multi-layered thin tubular film 5' cooled by a two-stage cooling (air cooling and water cooling) according to the conventional technique. A fourth temperature curve 169 of the graph represents temperature falls of the resin inner layer of the tubular portion of the multi-layered thin tubular film 5' cooled by the two-stage cooling. A fifth temperature curve 171 of the graph represents temperature falls of the resin outer layer of the multi-layered thin tubular film 5' cooled by a single-stage cooling (air cooling only) according to the conventional technique. A sixth temperature curve 172 of the graph represents temperature falls of the resin inner layer of the multi-layered thin tubular film 5' cooled by the single-stage cooling (air cooling only) according to the conventional technique.

The multi-layered thin tubular film cooled is formed such that a layer of a lower resin crystallization temperature Tc2 is positioned on a further inner side, and a higher resin crystallization temperature Tc1 is positioned on a further outer side. According to the conventional two-stage cooling method, in the case where the inner/outer layer is formed of the material of a low resin crystallization temperature Tc1, Tc2, crystallization is not possible at a short coverage section and the temperature fall time is long, so that crystallization restraint is insufficient.

According to the three-stage cooling of the present invention, in the first-stage cooling with the air-blow annular nozzle 124, the cooling air blown from the air-blow annular nozzle 124 counter-flows with respect to the flow in the tubular portion of the multi-layered thin tubular film 5'. Thereby, in comparison to conventional forward-flow cooling, the cooling temperature gradient is significantly greater, consequently highly improving the cooling effect of the first-stage. According to the counterflow cooling, the outer layer is cooled to a level close to the outer-layer crystallization temperature Tc1. In the water cooling of the subsequent second-stage cooling, the outer layer is rapidly cooled to the temperature lower than the outer-layer crystallization temperature Tc1. Such rapid cooling implements solidification with low crystallinity. In the solidification stage, an intermediate layer and an inner layer are each cooled to a level close to the crystallization temperature. Subsequently, a waterflow film after heat exchange is removed by the water drain unit 151. Further in the subsequent water cooling of the third-stage cooling, the inner layer resin is rapidly cooled to the crystallization temperature Tc2 thereof.

According to such rapid cooling, especially, the rapid cooling of the second-stage cooling, solidification with low crystallinity can be promoted, advancement of an inner strain stress phenomenon can be restrained, and generation of curling on a blown film as a final product can be restrained. Further, high transparency of the film can be secured. The high efficiency cooling can be achieved by reduction in the distance of the cooling coverage section represented by the vertical axis of the graph of Fig. 19C. The reduction can be achieved by reducing the vertical size of a cooling system where devices are vertically disposed, and the reduction consequently lowers the facility cost of the apparatus.

The temperature fall efficiency is optimized according to each of the three cooling stages. The first-stage cooling efficiency is maximized according to the air amount control by the adjustment damper 132 and the cooling capacity control by the first heat exchanger 133. Operation costs are excessively increased by an excessive increase in air amount and an excessive increase in heat exchange amount. A cooling capability at a necessary level reduces operation costs. The adjustment of the height-direction elevational difference distance h1 implements minimization of the operation costs. The second-stage cooling efficiency is maximized according to the water volume control by the first flow regulating valve 147 and the cooling capacity control by the second heat exchanger 148. Operation costs are excessively increased by an excessive increase in water volume and an excessive increase in heat exchange amount. A cooling capability at a necessary level reduces operation costs. The adjustment of the height-direction elevational difference distance h2 implements minimization of the operation costs. The third-stage cooling efficiency is maximized according to the water volume control by the second flow regulating valve 162 and the cooling capacity control by the third heat exchanger 163. Operation costs are excessively increased by an excessive increase in water volume and an excessive increase in heat exchange amount. A cooling capability at a necessary level reduces operation costs. The adjustment of the height-direction elevational difference distance h3 implements minimization of the operation costs.

The optimized operation described above is implemented in the manner that control operations are carried out to control the openings of the individual air feed duct 131, first flow regulating valve 147, and second flow regulating valve 162. In addition, control operations are carried out to control the heat exchange capacities (flow rates of cooling mediums) of the individual first heat exchanger 133, second heat exchanger 148, and third heat exchanger 163. In addition, control operations are carried out to control the distance h1 corresponding to the length of an initial cooling coverage section, the distance h2 that corresponds to the overflow amount corresponding to the height of the water level 141, the flow-down distance h3 for overflowing and flow-down, and the distance h4 corresponding to spraying. These control operations are carried out in accordance with detection signals indicative of pressures and temperatures detected by the air pressure sensor 134, the air temperature sensor 135, the first cooling water temperature sensor 149, the cooling water pressure sensor 164, and the second cooling water temperature sensor 170.

According to the multi-layered blown film forming apparatus and the multi-layer blown film forming method of the present invention, quality of the final product can be improved by restraining crystallization and advancing solidification.

## Claims

1. A multi-layered blown film forming apparatus comprising:
an adapter provided to supply a multiple types of molten resins;
a forming die provided on a downstream side in an axial direction of said adapter; and
a temperature controller mechanism,
wherein said molten resins of the multiple types are individually fed to said forming die through said adapter,
said forming die comprises:
a main body;
a multi-layer structure of a plurality of single-layer thin film dies disposed in an inner portion of said main body in said axial direction to produce a plurality of thin resin films corresponding to said molten resins of the multiple types; and
a first annular path formed between said main body and said multi-layer structure,
a multi-layered thin film in which said plurality of thin resin films are laminated passes through said first annular path and is outputted as a multi-layered thin annular film, and
said temperature controller mechanism individually controls temperatures of said plurality of single-layer thin film forming dies.

2. The multi-layered blown film forming apparatus according to claim 1, wherein said temperature controller mechanism comprise:
a plurality of cartridge heaters provided to pierce said multi-layer structure;
at least one temperature sensor provided in each of said plurality of single layer thin film forming dies of said multi-layer structure; and
a controller circuit configured to individually drive said plurality of cartridge heaters based on temperatures set for said plurality of single layer thin film forming dies and temperatures detected by said temperature sensors such that one of said plurality of single layer thin film forming dies is individually heated by a corresponding one of said plurality of cartridge heaters.

3. The multi-layered blown film forming apparatus according to claim 2, wherein said temperature controller mechanism further comprises:
a cooling air feeding tube provided to pierce said multi-layer structure, and to discharges cooling air for cooling said plurality of single layer thin film forming dies, and
said controller circuit controls an amount of said cooling air fed to said cooling air feeding tube.

4. The multi-layered blown film forming apparatus according to claim 2, wherein each of said plurality of single layer thin film forming dies comprises an upstream-side single layer forming die and a downstream-side single layer forming die,
an annular cooling air path is formed between said upstream-side single layer forming die and said downstream-side single layer forming die, and
said cooling air from said cooling air feeding tube flows through said annular cooling air path, to cool said upstream-side single layer forming die and said downstream-side single layer forming die.

5. The multi-layered blown film forming apparatus according to any of claims 1 to 4, further comprising:
a lip main body provided in a bottom portion of said forming die to have a lip portion which has a second annular path connected to said first annular path such that said multi-layered thin film is outputted,
said temperature controller mechanism further comprises:
an air reserving section provided between said lip main body and said multi-layer structure;
a bubble air feeding tube provided to pass through said multi-layer structure to said air reserving section and to feed bubble air to said air reserving section; and
an air nozzle configured to pass through said lip portion to said air reserving section and to discharges said bubble air present in said air reserving section to an inner portion of said multi-layered thin film outputted from said second annular path, and
said controller circuit controls an amount of said bubble air fed to said air reserving section through said bubble air feeding tube.

6. The multi-layered blown film forming apparatus according to claim 5, wherein said temperature control mechanism further comprises:
a band heater provided on an outer circumferential surface of at least one of said lip main body and said forming die, and
said control circuit drives said band heater to heat said bubble air in said air reserving section.

7. The multi-layered blown film forming apparatus according to any of claims 1 to 6, further comprising:
a cooling mechanism provided on a downstream side of said forming die to cool said multi-layered thin annular film.

8. The multi-layered blown film forming apparatus according to claim 7, wherein said cooling mechanism comprises:
a first cooling mechanism configured to air-cool said multi-layered thin annular film by using cooling airflow;
a second cooling mechanism provided on a downstream side of said first cooling mechanism and configured to cool said multi-layered thin annular film by using an annular cooling water flow; and
a third cooling mechanism provided on a downstream of said second cooling mechanism and configured to cool said multi-layered thin annular film by using cooling water spray.

9. The multi-layered blown film forming apparatus according to claim 8, wherein said cooling mechanism further comprises:
a first radiation thermometer configured to measure a temperature of said multi-layered thin annular film outputted from said forming die in non-contact, and
said first cooling mechanism controls a flow rate of said cooling airflow based on the measured temperature by said first radiation thermometer.

10. The multi-layered blown film forming apparatus according to claim 8 or 9, wherein said first cooling mechanism comprises:
an air feeding duct for feeding said cooling airflow to an annular air blow outlet to air-cool said multi-layered thin annular film by using said cooling airflow outputted from said annular air blow outlet;
an airflow rate adjusting unit interposed in said air feeding duct to adjust said cooling airflow rate; and
an air cooling heat exchanger unit interposed in said air feeding tube to cool said cooling airflow.

11. The multi-layered blown film forming apparatus according to any of claims 8 to 10, wherein said cooling mechanism further comprises:
a second radiation thermometer configured to measure a temperature of said multi-layered thin annular film outputted from said first cooling mechanism in non-contact, and
said second cooling mechanism controls a flow rate of said annular cooling water flow based on the measured temperature by said second radiation thermometer.

12. The multi-layered blown film forming apparatus according to any of claims 8 to 11, wherein said second cooling mechanism comprises:
a first cooling water feeding tube configured to feed first cooling water;
a first water flow rate adjusting unit interposed in said first cooling water feeding tube to adjust an flow rate of the first cooling water;
a first cooling water heat exchanger unit interposed in said first cooling water feeding tube to cool said first cooling water; and
a water reservoir unit configured to store said first cooling water, and
said water reservoir unit comprises a weir provided to an inner-side upper periphery of said water reservoir unit such that said first cooling water overflows as said annular cooling water flow, a height of said weir being adjustable from a water level of said first cooling water.

13. The multi-layered blown film forming apparatus according to any of claims 8 to 12, wherein said cooling mechanism further comprises:
a dewatering unit configured to remove water attached to said multi-layered thin annular film outputted from said second cooling mechanism, and
a distance between said second cooling mechanism and said dewatering unit is adjustable.

14. The multi-layered blown film forming apparatus according to any of claims 8 to 13, wherein said third cooling mechanism comprises:
a plurality of sprays provided to a circumference of said multi-layered thin annular film to spray second cooling water;
a second cooling water feeding tube configured to feed said second cooling water to said plurality of sprays;
a second cooling water flow amount adjustment unit interposed in said second cooling water feeding tube to adjust a flow rate of said second cooling water; and
a second cooling water heat exchanger unit interposed in said second cooling water feeding tube to cool said second cooling water.

15. The multi-layered blown film forming apparatus according to claim 1, wherein said plurality of single layer thin film forming dies have a same size,
each of said plurality of single layer thin film forming dies comprise:
a truncated conical upstream-side single layer forming die having a truncated conical portion; and
a truncated conical downstream-side single layer forming die connected to said upstream-side single layer forming die on a downstream side,
each of said upstream-side single layer forming die and said downstream-side single layer forming die each has a recess portion in a bottom portion, and said downstream-side single layer forming die engages said recess portion of said upstream-side single layer forming die,
said upstream-side single layer forming die receives a corresponding one of said molten resins of the multiple types, and feeds said corresponding molten resin to said downstream-side single layer forming die, and
said downstream-side single layer forming die comprises a radial resin path and a spiral resin path formed to a side face of said truncated conical portion and connected to said radial resin path, and outputs said corresponding molten resin fed from said upstream-side single layer forming die to said first annular path through said radial resin path and said spiral resin path.

16. A multi-layered blown film forming method comprising:
independently controlling temperatures of a plurality of single layer thin film forming dies, wherein a forming die comprises a main body, a multi-layer structure of said plurality of single layer thin film dies disposed in an inner portion of said main body in an axial direction;
individually feeding molten resins of multiple types to said plurality of single layer thin film forming dies through an adapter;
producing a plurality of thin resin films corresponding to said molten resins of the multiple types by said plurality of single layer thin film forming dies; and
outputting, as a multi-layered thin annular film, a multi-layered thin film of said plurality of thin resin films from said plurality of single layer thin film forming dies are overlaid, through a first annular path formed between said main body and said multi-layer structure.

17. The multi-layered blown film forming method according to claim 16, wherein said controlling comprises:
comparing a temperature set for each of said plurality of single layer thin film forming dies and a temperature detected by at least one temperature sensor provided in said single layer thin film forming die; and
driving said plurality of cartridge heaters independently based on a result of the comparison such that said single layer thin film forming die is individually heated by a corresponding one of a plurality of cartridge heaters provided to pierce said multi-layer structure.

18. The multi-layered blown film forming method according to claim 16, wherein said controlling comprises:
controlling a flow rate of cooling air fed to a cooling air feeding tube which is provided to pierce said multi-layer structure such that cooling air is discharged for cooling said plurality of single layer thin film forming dies.

19. The multi-layered blown film forming method according to claim 16, wherein each of said plurality of single layer thin film forming dies comprise an upstream-side single layer forming die and a downstream-side single layer forming die,
an annular cooling air path is formed between said upstream-side single layer forming die and said downstream-side single layer forming die,
said controlling further comprise:
cooling said upstream-side single layer forming die and said downstream-side single layer forming die with cooling air fed from said cooling air feeding tube and flowing through said annular cooling air path.

20. The multi-layered blown film forming method according to any of claims 16 to 19, wherein a lip main body is provided in a bottom portion of said forming die, and has a lip portion having a second annular path connected to said first annular path such that said multi-layered thin film is outputted,
said controlling comprises:
feeding bubble air to an air reserving section through a bubble air feeding tube provided to pierce said multi-layer structure, to said air reserving section provided between said lip main body and said multi-layer structure;
controlling a flow rate of said bubble air fed to said air reserving section through said bubble air feeding tube; and
discharging said bubble air present in said air reserving section to an inner portion of said multi-layered thin film outputted from said second annular path through an air nozzle which pierces said lip portion to said air reserving section.

21. The multi-layered blown film forming method according to any of claims 16 to 20, further comprising:
cooling said multi-layered thin annual film on a downstream side of said forming die.

22. The multi-layered blown film forming method according to claim 21, wherein said cooling step comprises:
carrying out first cooling to air-cool said multi-layered thin annular film by using annular cooling air in a first cooling mechanism;
carrying out second cooling to cool said multi-layered thin annular film by using an annular cooling water flow in a second cooling mechanism on a downstream side of said first cooling mechanism;
carrying out third cooling to cool said multi-layered thin annular film by using cooling water spray in a third cooling mechanism on a downstream side of said second cooling mechanism.

23. The multi-layered blown film forming method according to claim 22, wherein said carrying out first cooling comprises:
measuring a temperature of said multi-layered thin annular film; and
controlling a flow rate of said annual cooling airflow based on the measured temperature of said multi-layered thin annular film in a first cooling mechanism.

24. The multi-layered blown film forming method according to claim 23, wherein said carrying out second cooling comprises:
controlling a flow rate of said annular cooling water flow based on the measured temperature of said multi-layered thin annular film.

25. The multi-layered blown film forming method according to any of claim 22 to 24, wherein said carrying out first cooling comprises:
feeding a cooling airflow to said annular air blow outlet to air-cool said multi-layered thin annular film by using said annual cooling air fed from said annular air blow outlet;
adjusting an flow rate of said cooling airflow in a midway of said air feeding tube; and
cooling said cooling airflow in a midway of said air feeding tube.

26. The multi-layered blown film forming method according to any of claim 22 to 25, wherein said carrying out second cooling comprises:
feeding first cooling water through a first cooling water feeding tube;
adjusting a flow rate of said first cooling water in a midway of said first cooling water feeding tube;
cooling the first cooling water in a midway of said first cooling water feeding tube;
storing said first cooling water in a reservoir unit; and
cooling said multi-layered thin annular film by using said annular cooling water flow overflowing over a weir from said reservoir unit.

27. The multi-layered blown film forming method according to any of claim 22 to 26, wherein said cooling mechanism further comprises:
a dewatering unit configured to remove water attached to said multi-layered thin annular film outputted from a second cooling mechanism, and
said carrying out second cooling comprises:
adjusting a distance between said second cooling mechanism and said dewatering unit based on a desired property of said multi-layered thin annular film.

28. The multi-layered blown film forming method according to any of claims 22 to 27, wherein said carrying out third cooling comprises:
cooling said multi-layered thin annular film by spraying second cooling water to a circumference of said multi-layered thin annular film from a plurality of sprays;
feeding said second cooling water to said plurality of sprays through a second cooling water feeding tube;
adjusting a flow rate of said second cooling water in a midway of said second cooling water feeding tube; and
cooling said second cooling water in a midway of said second cooling water feeding tube.
